# EUROPEAN PATENT APPLICATION

(11) **EP 2 228 580 A2**
(43) Date of publication of application: **15.09.2010**
(21) Application number: 10154790.9
(22) Date of filing: 26.02.2010
(51) Int. Cl.: F16L 27/08

(54) **Pneumatic fittings for active air suspension**

(30) Priority: 11.03.2009 US 401946
(71) Applicant: ArvinMeritor Technology, LLC, Troy, MI 48084 (US)
(72) Inventor: Kleckner, Mark, Roseville, MI 48066 (US); Lloyd, Jeffrey, Auburn Hills, MI 48326 (US); Cicinelli, Bryan, Clarkston, MI 48346 (US); Saylor, Brian, South Lyon, MI 48178 (US)
(74) Representative: Jones, John Bryn

(57) **Abstract**

A fitting for an active air suspension includes a housing (64) with a central bore and a rigid tube (66) having a first tube end (76) inserted into the central bore with a second tube end (78) extending outwardly of the housing. The first tube end includes a plastically deformed portion (86) that prevents the rigid tube (66) from being removed from the housing (64). A retention collar (68) is used to secure a hose end (70) to the second tube end.
In the final fitting, the rigid tube (66) can rotate within the housing (64) but it is not axially removable from the housing (64).

## Description

### TECHNICAL FIELD

This invention generally relates to a high-pressure fitting that can be used in an active air suspension system.

### BACKGROUND OF THE INVENTION

Air suspensions utilize air springs to provide desired output characteristics, such as ride comfort and vehicle performance for example. One known active air suspension uses an air spring assembly that includes a primary airbag mounted around a piston airbag such that the piston airbag provides a rolling surface for the primary airbag. A change in piston airbag volume changes an effective piston area of the primary airbag. A relatively small change in the effective piston area provides a change in a spring rate of the air spring assembly. The pressures in the piston airbag and the primary airbag are selectively controlled to provide infinite variation in spring rates without requiring any auxiliary tanks and associated actuators. The smaller volume of the piston airbag relative to the larger volume of the primary airbag permits rapid pressure and volume changes to enable active suspension control.

Fittings are used to connect supply lines or conduits to various system components. Due to the active configuration of the suspension, there is a significant amount of relative motion between components during operation of the vehicle. Traditional fittings utilize a threaded outer tube into which a flexible line or hose is inserted. This type of fitting is not reliable when relative motion between interconnected components exists. Thus, there is a need for a high pressure, low-cost fitting for active air suspensions.

### SUMMARY OF THE INVENTION

A fitting for an active air suspension includes a housing with a central bore and a rigid tube that is inserted into the central bore. The rigid tube has a first tube end that is positioned within the central bore and a second tube end that extends outwardly of the housing. A retention collar is used to secure a hose end to the second tube end.

In one example, the first tube end includes a plastically deformed portion that prevents the rigid tube from being removed from the housing.

In one example, the rigid tube is rotatable within the housing but is not removable from the housing.

In one example, the retention collar comprises a crimp collar that crimps the hose end against the second tube end of the rigid tube.

One example method for forming the fitting includes the steps of inserting a first end of a rigid tube within a central bore of a housing such that a second tube end extends outwardly of the housing, subsequently deforming the first end of the rigid tube to form a retention feature to prevent the rigid tube from being removed from the housing, and securing a hose end to the second end of the rigid tube with a retention collar.

These and other features of the present invention can be best understood from the following specification and drawings, the following of which is a brief description.

### BRIEF DESCRIPTION OF THE DRAWINGS

Figure 1 is a general side view of one example of an active air suspension as installed on a vehicle.
Figure 2 is a sectional view of an air spring assembly as used in the active air suspension of Figure 1.
Figure 3 is a sectional view of the air spring in a first position.
Figure 4 is a sectional view of the air spring in a second position.
Figure 5 is a perspective view of one example of a fitting for an active air suspension system.
Figure 6 is an exploded view of the fitting of Figure 5.
Figure 7 is a sectional view of the fitting of Figure 5.

### DETAILED DESCRIPTION OF THE PREFERRED EMBODIMENT

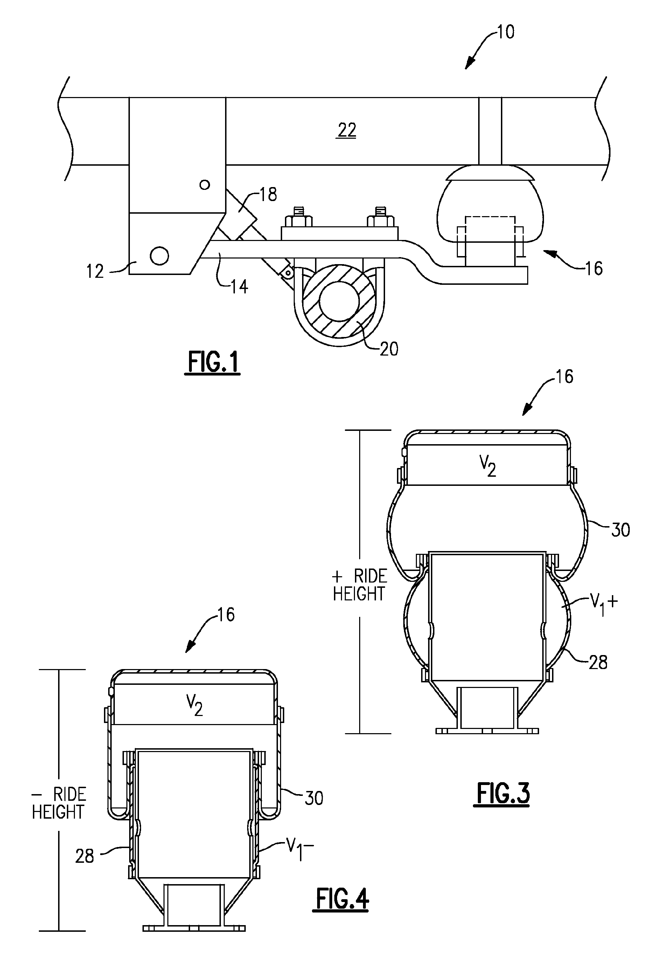

Figure 1 illustrates an air suspension system 10 for a vehicle. The air suspension system 10 generally includes a bracket 12, a longitudinal member 14, an air spring assembly 16, a damper 18, and an axle assembly 20. The air suspension system 10 is fixed to a frame or chassis of the vehicle (shown schematically at 22). The longitudinal member 14 could comprise a suspension arm, for example, and the axle assembly 20 could comprise any type of axle, such as a drive axle, non-drive axle, trailer axle, etc. The axle assembly 20 extends between laterally spaced wheels (not shown). It should be understood that the air suspension system 10 includes a longitudinal member 14, an air spring assembly 16, and a damper 18 at each lateral end of the axle assembly 20.

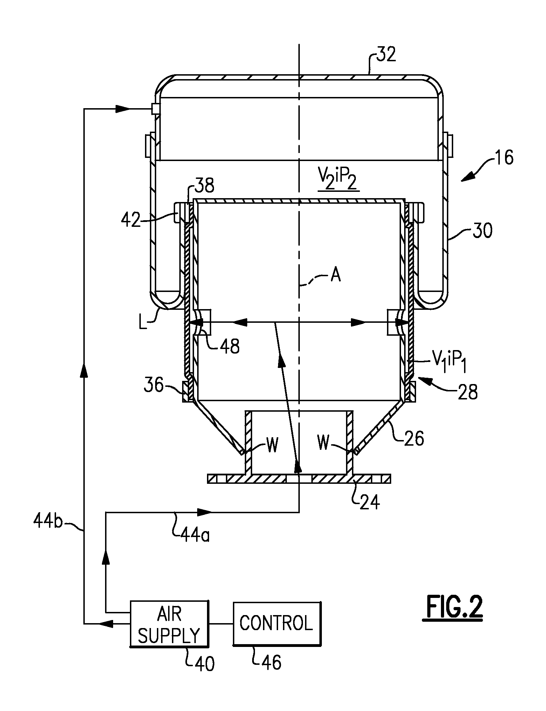

Referring to Figure 2, the air spring assembly 16 is illustrated in cross-section. The air spring assembly 16 is defined along a central vertical axis A and includes a lower mount 24 (illustrated schematically), a piston support 26 attached to the lower mount 24, a piston airbag 28, and a primary airbag 30. An upper mount 32 is attached to the primary airbag 30. The upper 32 and lower 24 mounts provide attachment for the air spring assembly 16 between the longitudinal member 14 and chassis 22 (see Figure 1).

The piston support 26 is a cylindrical member defined about the axis A. At the lower mount 24 the piston support 26 can be attached to many different structures such as a strut, shock, damper, or other similar mechanism, for example. In one example, the piston support 26 is attached to the lower mount 24 at welds W; however other attachment methods could also be used. The piston support 26 and the lower mount 24 are relatively rigid components.

The piston airbag 28 is a flexile, resilient member and is attached to the piston support 26 through a first band 36 and a second band 38. The first band 36 is secured at a lower end of the piston support 26 and the second band 38 is secured at an upper or opposite end of the piston support 26. While bands are shown, it should be understood that other attachment structures and/or methods could be used to secure the piston airbag 28 to the piston support 26. The piston airbag 28 defines a first volume V1 that is enclosed vertically between the bands 36, 38 and between an inner surface of the piston airbag 28 and an outer surface of the piston support 26.

The primary airbag 30 is mounted to the piston air bag 28 through a third band 42 which is spaced radially outwardly relative to the second band 38 with the primary airbag 30 being located between the second 28 and third 42 bands. In other words, the primary airbag 30 is sandwiched between the third band 42 and the second band 38. The primary airbag 30 defines a second volume V2. It should be understood that while two volumes V1, and V2 are disclosed in the illustrated embodiment, additional volumes could also be utilized within the spring assembly 16 as needed. Further, any of these volumes may be selectively segmented to provide further incremental volume changes.

An air supply system 40 (illustrated schematically in Figure 2) communicates air independently into the volumes V1, V2 through a first and second supply conduits 44a, 44b respectively in response to a controller 46 (illustrated schematically). The controller 46 is a suspension controller that provides active suspension control methodology. Ports 48 through the piston structure 26 supply air into the first volume V1.

The piston airbag 28 operates as a rolloff piston surface for the primary airbag 30. In other words, the primary airbag 30 provides a rolling lobe L over a piston assembly having a variable diameter provided by the variable volume of the piston airbag 28. As the air spring assembly 16 experiences road load inputs, the lobe L of the primary airbag 30 rolls along the outer surface of the piston airbag 28. By changing the volume V1 or pressure P1 within the piston airbag 28 the outer diameter of the piston airbag 28 changes. A change in the piston airbag 28 volume V1 thereby changes the effective piston area of the primary airbag 30. It is also understood that the primary airbag 30 will exert a pressure P2 against the piston airbag 28, tending to reduce the outer diameter of the piston airbag 28 until an equilibrium diameter is reached. Therefore a change in pressure P1 will change the radial spring rate of the piston airbag 28 and change the equilibrium diameter also affecting the primary airbag spring rate.

Referring to Figure 3, increasing the air pressure within the volume V1 increases the diameter of the piston airbag 28 to obtain a greater spring rate and ride height. That is, the increase in diameter of the piston airbag 28 results in an extension of the airbag assembly 16 as volume V1 effectively provides a larger rolloff piston. The opposite results are obtained when the pressure within the piston airbag 28 is reduced as volume V1 respectively decreases (Figure 4). This reduces the ride height and spring rate.

A relatively small change in volume V1 provides a change in the spring rate of the primary airbag 30 as the diameter of the rolloff surface is selectively modified. A change in the pressure within the volume V1 couples a change in spring rate with a change in ride height when the pressure within volume V2 is maintained. The compression and rebound rates may alternatively be decoupled by simultaneously changing the volume of both V1 and V2.

By selectively controlling the pressure within volumes V1 and V2, infinite variation in spring rates are provided without an auxiliary tank and associated actuators. The relatively smaller volume of volume V1 relative to volume V2 permits rapid pressure and volume changes which enables active suspension control.

This type of active suspension configuration requires robust connection components that can accommodate relative movement between the various suspension components. As such, the conduit or supply lines (see for example, the supply conduits 44a, 44b of Figure 2) that are used to connect the air supply system 40 to the various components need to have robust and reliable fittings 60 that can provide a sealed connection interface.

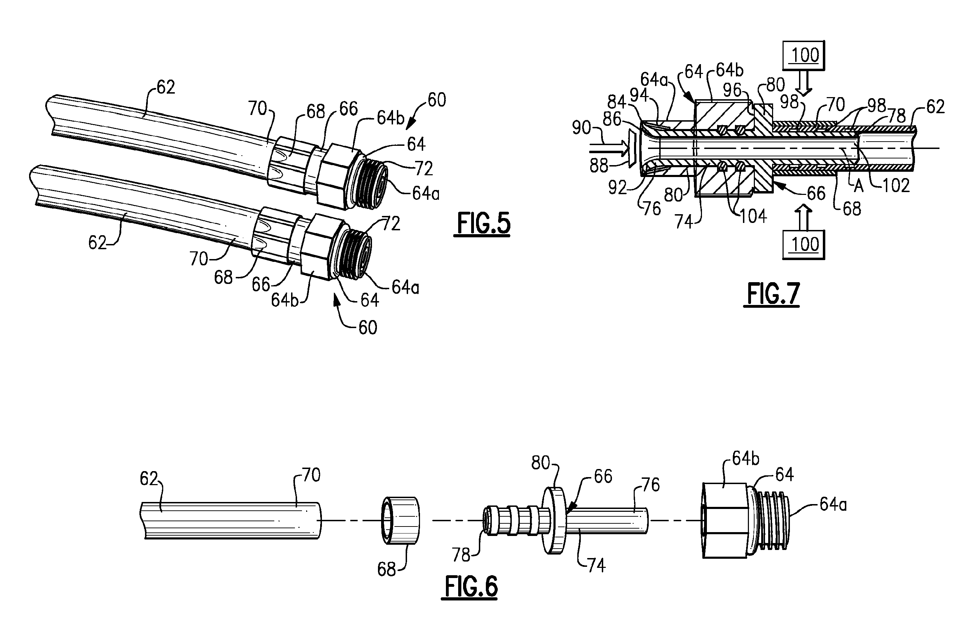

One example of such fittings 60 is shown in Figures 5-7. Each fitting 60 connects a pneumatic supply conduit, such as a flexible hose 62 for example, to any of the various active air suspension components described above.

The fitting 60 includes a housing 64, a rigid tube 66, and a retention collar 68 that secures one hose end 70 of the flexible hose 62 to the rigid tube 66. The housing 64 includes a first housing portion 64a with a threaded outer surface 72 and a second housing portion 64b that is defined by a diameter that is greater than a diameter of the first housing portion 64a. The threaded outer surface 72 connects to a mating threaded bore (not shown) at a connection interface of the associated suspension component. The second housing portion 64b has a polygonal shaped outer surface that provides a gripping surface for a tool or hand grip such that the fitting can be securely tightened in place. In one example, the housing 64 comprises a standard Voss housing.

As shown in Figure 6, the rigid tube 66 has an axially extending body 74 with a first tube end 76, a second tube end 78, and an enlarged flange portion 80 formed about the body 74 at a location between the first 76 and second 78 tube ends. In the example shown, the enlarged flange portion 80 is slightly off set in an axial direction from being centrally positioned on the body 74 in a direction toward the second tube end 78.

As shown in Figure 7, the housing 64 includes a central bore 82 that receives the rigid tube 66. The first tube end 76 of the rigid tube 66 is inserted within the central bore 82 such that the first tube end 76 does not extend axially beyond an end face 84 of the first housing portion 64a.

The first tube end 76 has an initial shape (see Figure 6) that is initially defined as having the same constant diameter of the body 74. After the first tube end 76 is inserted within the central bore 82, the first tube end 76 is plastically deformed to provide a retention feature 86 that prevents the rigid tube 66 from being removed from the housing 64 in an axial direction (see Figure 7). As such, the first tube end 76 is modified from the initial shape to the final shape after the rigid tube 66 has been inserted into the housing 64. In the final shape, the first tube end 76 comprises a plastically deformed end portion.

In one example, a tooling fixture 88 is pressed as indicated by arrow 90 into the first tube end 76 to form the retention feature 86. In the example shown, the retention feature 86 comprises a flare 92 formed with an increasing diameter relative to the body 74 of the rigid tube 66. While a flare 92 is shown, it should be understood that the retention feature 86 could also be formed to have various different shapes and/or configurations.

The central bore 82 is of generally constant diameter as the bore 82 extends through the second housing portion 64b toward the first housing portion 64a. As the bore 82 nears the end face 84 of the first housing portion 64a, the bore 82 continuously increases in size to form a tapered surface 94. The flare 92 is positioned within this portion of the bore 82 such that the flare 92 is surrounded by the tapered surface 94. If the rigid tube 66 tries to pull out of the housing 64, the flare 92 will grip against the tapered surface 94 to prevent the components from separating from each other.

The enlarged flange portion 80 of the rigid tube 66 abuts against an end face 96 of the second housing portion 64b. This seats the rigid tube 66 at the proper location within the housing 64 prior to the first tube end 76 being deformed. The rigid tube 66 includes a textured outer surface that extends from the enlarged flange portion 80 to the second tube end 78. In one example, the textured surface comprises a plurality of protruding barbs 98 that are axially spaced apart from each other along a central axis A defined by the rigid tube 66. It should be understood that while barbs are shown, other textured surfaces could also be used such as grooves, protrusions, ridges, etc. for example.

The retention collar 68 is then secured around the hose end 70 such that the hose end 70 is clamped against the barbs 98. In one example, the retention collar 68 comprises a crimp collar that is crimped by a machine 100 around the hose end 70. Once the collar 68 is secured in place, a final fitting 60 is formed. In this final fitting, the rigid tube 66 is able to rotate within the housing 64 about the axis A but is not axially removable from the housing 64. The rigid tube 66 defines a high-pressure air flow path 102 through the fitting 60 to communicate air flow from the hose 62 to the associated active air suspension component.

A seal assembly 104 is used to provide a sealed interface between the rigid tube 66 and the housing 64. In one example, the seal assembly 104 comprises two O-rings that are seated within the second housing portion 64b, and which directly engage an outer surface of the body 74 of the rigid tube 66.

The subject invention provides a low cost solution for a high pressure pneumatic fitting. The use of the rigid tube 66 within the housing 64 provides a secure and robust connection interface for attaching hoses to the various suspension components. It should be understood that while the hoses are shown with the fittings being only at one end, the subject fittings could also be used at both ends of the hose.

Although a preferred embodiment of this invention has been disclosed, a worker of ordinary skill in this art would recognize that certain modifications would come within the scope of this invention. For that reason, the following claims should be studied to determine the true scope and content of this invention.

## Claims

1. A fitting for a vehicle suspension comprising:
a housing having a central bore;
a rigid tube having a first tube end and a second tube end, said first tube end being inserted within said central bore and said second tube end extending outwardly of said housing; and
a retention collar surrounding said second tube end to secure a flexible hose end to said rigid tube.

2. The fitting according to claim 1 wherein said rigid tube is rotatable within said housing and includes a retention feature to prevent said rigid tube from being removed from said housing.

3. The fitting according to claim 1 or 2 wherein said first tube end has an initial shape during insertion into said central bore, and wherein said first tube end has a plastically deformed retention feature as a final shape after insertion into said bore, said plastically deformed retention feature preventing said rigid tube from being removed from said housing.

4. The fitting according to claim 3 wherein said plastically deformed retention feature comprises a flared end defined by an increasing diameter.

5. The fitting according to claim 4 wherein said housing includes a first housing end and a second housing end, said central bore being defined by a constant bore diameter from said second housing end toward said first housing end, and with said central bore transitioning into a tapered surface near said first housing end that is defined by an increasing diameter, and wherein said flared end is surrounded by said tapered surface such that said flared end and said tapered surface cooperate to prevent said rigid tube from being removed from said housing.

6. The fitting according to claim 1 wherein said rigid tube has an axially extending body portion defining an internal high-pressure air flow path, said rigid tube including an enlarged flange portion formed about said axially extending body at a position between said first and said second tube ends, said enlarged flange portion abutting against an end face of said housing.

7. The fitting according to claim 6 wherein said rigid tube has a textured outer surface extending from said enlarged flange portion to said second tube end, said textured outer surface providing a gripping interface for an inner surface of the flexible hose end.

8. The fitting according to claim 7 wherein said retention collar comprises a crimp collar that is positioned to surround the flexible hose end and said second tube end, said crimp collar exerting a crimp force against said flexible hose end to securely clamp the flexible hose end against said textured surface to prevent the flexible hose end from being axially moveable relative to said second tube end.

9. The fitting according to claim 7 or 8 wherein said textured outer surface comprises a plurality of protruding barbs that are axially spaced apart from each other along a central axis defined by said rigid tube.

10. The fitting according to any one of claims 6 to 9 wherein said housing has a first housing portion defined by a threaded outer surface and a second housing portion defined by an outer diameter that is greater than a diameter of said first housing portion, and including a seal assembly received in said central bore within said second housing portion, said seal assembly sealing between an inner surface of said housing and an outer surface of said rigid rube, and wherein said enlarged flange portion abuts against said end face of said second housing portion.

11. An active air suspension system comprising:
a first suspension component;
a second suspension component movable relative to said first suspension component;
a hose fluidly connecting said first suspension component to said second suspension component, said hose having a first hose end secured to said first suspension component and a second hose end secured to said second suspension component; and
at least one fitting that connects one of said first and said second hose ends to a respective one of said first and said second suspension components, said fitting including
a housing having a central bore;
a rigid tube having a first tube end and a second tube end, said first tube end being inserted within said central bore and said second tube end extending outwardly of said housing, said rigid tube defining an internal high-pressure air flow path; and
a retention collar surrounding said one of said first and said second hose ends and said second tube end to secure said one of said first and said second hose ends to said rigid tube.

12. The active air suspension according to claim 11 wherein said rigid tube is rotatable within said central bore.

13. The active air suspension according to claim 11 wherein said housing comprises a first housing portion having a threaded outer surface and a second housing portion defined by an outer diameter that is greater than a diameter of said first housing portion, and wherein said first tube end is received within said central bore such that said first tube end does not extend axially beyond an end face of said first housing portion, and wherein said rigid tube includes an enlarged flange portion positioned between said first and said second tube ends that abuts directly against an end face of said second housing portion, preferably said rigid tube includes a barbed outer surface extending from said enlarged flange portion to said second tube end, and wherein an inner surface of said one of said first and said second hose ends is clamped against said barbed outer surface by said retention collar, preferably the active air suspension includes a seal assembly sealing directly against an inner surface of said second housing portion and an outer surface of said rigid tube.

14. The active air suspension according to claim 13 wherein said first tube end includes a plastically deformed portion of increasing diameter that abuts against an inner surface of said first housing portion to prevent said rigid tube from being removed from said housing.

15. A method of forming a fitting for an active air suspension comprising the steps of:
(a) inserting a first end of a rigid tube within a central bore of a housing such that a second tube end extends outwardly of the housing;
(b) subsequently deforming the first end of the rigid tube to form a retention feature to prevent the rigid tube from being removed from the housing; and
(c) securing a hose end to the second end of the rigid tube with a retention collar, preferably the method includes forming a barbed outer surface along the second end of the rigid tube and wherein step (c) further includes crimping the retention collar against the barbed outer surface.
